# FASCICULE DE BREVET EUROPEEN

(11) **EP 2 027 183 B1**
(45) Date de publication et mention de la délivrance du brevet: **08.09.2021**
(21) Numéro de dépôt: 07823506.6
(22) Date de dépôt: 08.06.2007
(51) Int. Cl.: C08G 69/40

(54) **COPOLYMÈRES À MOTIF AMIDES ET À MOTIF ÉTHERS AYANT DES PROPRIÉTÉS OPTIQUES AMÉLIORÉES**
COPOLYMERE MIT AMID-EINHEITEN UND ETHER-EINHEITEN UND VERBESSERTEN OPTISCHEN EIGENSCHAFTEN
COPOLYMERS HAVING AMIDE UNITS AND ETHER UNITS WITH IMPROVED OPTICAL PROPERTIES

(30) Priorité: 14.06.2006 FR 0605284; 16.08.2006 US 838011 P
(43) Date de publication de la demande: 25.02.2009
(73) Titulaire: ARKEMA FRANCE, 92700 Colombes (FR)
(72) Inventeur: BLONDEL, Philippe, F-27300 Bernay (FR); TURAN, Inci, F-27100 Val De Reuil (FR); MONTANARI, Thibaut, F-27300 Manneval (FR); MALET, Frédéric, F-76000 Rouen (FR)
(86) Numéro de dépôt international: PCT/FR2007/051390
(87) Numéro de publication internationale: WO 2008/006987

(56) Documents cités:
- EP-A1- 0 471 960
- EP-A1- 1 857 097
- WO-A1-03/070806
- WO-A1-2004/037898
- DE-A1- 4 310 970
- FR-A1- 2 871 808
- JP-A- S6 274 643

## Description

La présente invention porte sur de nouveaux copolymères à base de motifs amides et de motifs polyethers comme décrit dans les présentes revendications, ces copolymères étant typiquement transparents et étant amorphes ou présentant une cristallinité allant d'une « très faible semi-cristallinité » à une « cristallinité intermédiaire ».

Pour mieux situer l'invention et le problème qu'elle résout, nous allons citer cinq catégories de matériaux polyamides existants. Par « matériaux polyamides », on entend des compositions à base de polyamides, copolyamides et alliages de polyamides ou à base de polyamides.

### (1) Matériaux polyamides modifiés choc (PA choc)

Ce sont des alliages de polyamide avec une quantité minoritaire d'élastomère, typiquement autour de 20% en poids. Le polyamide est typiquement un polyamide semi-cristallin. Ces alliages ont l'avantage d'une très bonne tenue au choc, très améliorée par rapport au polyamide seul, typiquement trois fois meilleure ou plus. Ils possèdent également une bonne tenue chimique, une résistance à la déformation à chaud (60°C) suffisante. Ils ont le désavantage d'être opaques, ce qui peut être gênant pour des pièces décoratives. Un exemple de polyamide choc bien connu est le « Zytel ST801 » de DuPont.

### (2) Matériaux polyamides amorphes transparents (amPA TR)

Ce sont des matériaux transparents, amorphes ou très peu semi-cristallins (enthalpie de fusion lors de la deuxième chauffe DSC inférieure à 30 J/g), rigides (module de flexion ISO > 1300 MPa), ne déformant pas à chaud, à 60°C, car de température de transition vitreuse Tg supérieure à 75°C. Cependant, ils sont assez peu résistants au choc, présentant un bien moindre choc ISO Charpy entaillé par comparaison avec les polyamides modifiés choc, et leur tenue chimique n'est pas excellente notamment du fait de leur nature amorphe. Il existe également - mais il s'agit de matériaux moins courants - des polyamides transparents semi-cristallins (ou micro-cristallins), typiquement avec des enthalpies de fusion lors de la deuxième chauffe DSC entre 2 et 30 J/g, ces matériaux étant également assez rigides, ayant un module de flexion ISO > 1000 MPa.

### (3) Polyéther-bloc-amide et copolymères à motifs éthers et amides (PEBA)

Ce sont des copolyamides à base de motifs éthers et de motifs amides, les polyétheramides et, en particulier, les polyéther-bloc-amide (PEBA). Ce sont des matériaux très souples, bien résistants au choc, mais dont la transparence est assez faible (45 à 65% de transmission lumineuse à 560 nm pour une épaisseur de 2mm), tout comme leurs homologues polyamides sans motifs éthers.

### (4) Polyamides semi-cristallins (PA)

Ce sont typiquement des polyamides aliphatiques linéaires. Leur cristallinité se manifeste par la présence de sphérolites dont la taille est suffisamment grande pour que le matériau ne soit pas très transparent (transmission lumineuse inférieure à 75%).

### (5) Polyamides transparents semi-cristallins (scPA TR)

Ce sont plus précisément des polyamides micro-cristallins où la taille des sphérolites est suffisamment petite pour conserver la transparence; (voir brevets européens EP 550 308 et EP 725 101) (transparence > 75 %).

Dans le **Tableau 1A** ci-après, on a résumé les différentes propriétés des cinq catégories de polyamides que l'on vient d'indiquer :

**Tableau 1A**

| Catégorie de polyamide | Transparence (a) | Tenue au choc/à la casse (b) | Souplesse (c) | Tenue à chaud (d) | Tenue chimique (e) | Fatigue élastique (f) | Mise en œuvre (g) |
|---|---|---|---|---|---|---|---|
| (1) PA Choc | --- | +++ | + | ++ | +++ | + | +++ |
| (2) amPA TR⁽¹⁾ | +++ | - | - à --- | ++ à +++ | - à --- | -- à + | - |
| (3) PEBA⁽²⁾ | -- à + | + à +++ | + à +++ | + à ++ | + à ++ | +++ | ++ à +++ |
| (4) PA | -- à - | + | + | ++ | +++ | + | +++ |
| (5) scPA TR | ++ à +++ | + | - à + | - à + | + à +++ | - à + | - |

| | | | | | | | |
|---|---|---|---|---|---|---|---|
| Notes de --- = très mauvaise à +++ = très bon | | | | | | | |

### DEFINITIONS du tableau 1A :

(a) Transparence : se caractérise par la mesure de transmittance à 560 nm au travers d'une plaque polie de 2 mm d'épaisseur.
(b) Tenue au choc / à la casse : se caractérise par un test de pliure rapide ou par un choc Charpy entaillé ISO179.
(c) Souplesse : se caractérise par le module de flexion ISO178.
(d) Tenue à chaud : capacité du polyamide à ne pas se déformer s'il est placé en atmosphère chaude, vers 60°C, et sous l'effet d'un poids plus ou moins important.
(e) Tenue Chimique : aptitude du polyamide à ne pas s'endommager (matification, craquelure, fissure, casse) au contact d'un produit chimique (alcool...) et, en particulier, s'il est placé sous contrainte, c'est-à-dire "stress-cracking".
(f) Fatigue élastique : aptitude du polyamide à être plié un grand nombre de fois sans casse, retour élastique, par exemple test "Ross-Flex".
(g) Mise en oeuvre : aptitude du polyamide à se mettre aisément en oeuvre par un procédé d'injection (temps de cycle court, démoulage aisé, pièce non déformée).

Le but de l'invention est de trouver de nouvelles compositions transparentes, résistantes au choc, pas trop rigides et même jusqu'à très souples, possédant une bonne tenue ou résistance à la déformation à chaud (60°C) et/ou une bonne tenue chimique. L'aptitude à la résistance à la pliure alternée (fatigue) et l'aptitude à se mettre aisément en œuvre par injection sont aussi des qualités qui peuvent être recherchées. Autrement dit, on a recherché une composition combinant l'essentiel, ou du moins un plus grand nombre, des avantages des trois premières catégories précédentes (PA choc, amPA TR, PEBA).

Les copolymères PEBA appartiennent à la classe particulière des polyétheresteramides lorsqu'ils résultent de la copolycondensation de séquences polyamide à extrémités carboxyliques réactives avec des séquences polyéther à extrémités réactives, qui sont des polyétherpolyols (polyétherdiols), les liaisons entre les blocs polyamide et les blocs polyéther étant des liaisons ester, ou encore à la classe des polyétheramides lorsque les séquences polyéther sont à extrémités amine.

Différents PEBA sont connus pour leurs propriétés physiques telles que leur flexibilité, leur tenue au choc, leur facilité de mise en œuvre par injection.

L'amélioration de la transparence des PEBA a déjà fait l'objet de différentes recherches.

Le brevet français FR 2 846 332 décrit l'utilisation de PEBA dans lesquels le bloc polyamide est un copolyamide microcristallin non miscible avec le bloc polyéther. En particulier, l'Exemple 1 décrit un polyamide sur base 6/11/12, régulé avec l'acide adipique et couplé avec du polytétraméthylène glycol (abrégé PTMG). Cependant, ces copolymères ont une température de transition vitreuse Tg proche de 70°C. De ce fait, ce copolymère se ramollit et se déforme trop dès que la température se rapproche de la Tg, dès 60°C environ, ce qui se rencontre fréquemment dans les conditions de vies usuelles du produit, par exemple sous un pare-brise de voiture ou à l'intérieur d'un conteneur en plein soleil. De plus, ce copolymère ne comporte pas de motif cycloaliphatique.
Le document JPS6274643 décrit une structure laminée comprenant une couche intermédiaire à base de polyamide élastomère entre 2 couches de métal, ayant une propriété vibration et adhésion améliorée.
Le document WO2004/037898 décrit un copolymère PEBA transparent particulier dans lequel le bloc polyamide est semi-cristallin, ayant une dureté Shore D comprise entre 20 et 70.
Le document EP A1857097 décrit un polymère polyétheramide soluble ou dispersible dans l'éthanol utilisable dans les applications telles que des compositions de fixation capillaire.

D'une manière générale les copolymères à motifs éthers et amides connus sont constitués de séquences polyamides aliphatiques linéaires et semi-cristallines (par exemple les « Pebax » d'Arkema, les « Vestamid E » de Degussa).

La Société déposante a découvert de façon surprenante que si, au contraire, on utilise des monomères de polyamides de caractère cycloaliphatique, donc non aliphatique linéaire, et si on les copolymérise avec des polyéthers, on obtient des copolymères transparents et amorphes ou très peu semi-cristallins. Qui plus est, on obtient des matériaux résistant à la déformation à chaud à 60°C - car la température de transition vitreuse, Tg, est supérieure ou égale à 75°C - et possédant une très bonne tenue au choc et une bonne flexibilité.

La présente invention a donc pour objet un copolymère à base de motifs amides et de motifs éthers, les motifs amides étant constitués majoritairement d'une association équimolaire d'au moins une diamine et d'au moins un diacide carboxylique, là où les diamines étant majoritairement cycloaliphatiques et le ou les diacides carboxyliques étant majoritairement aliphatiques linéaires, les motifs amides pouvant éventuellement comprendre, mais de façon minoritaire, au moins un autre comonomère de polyamide, les proportions respectives de monomères des motifs éthers et amides étant choisies de telle sorte que :
- ledit copolymère présente une transparence élevée qui est telle que la transmittance à 560 nm sur plaque de 2 mm d'épaisseur est supérieure à 75% ;
- ledit copolymère est amorphe ou présente une cristallinité telle que l'enthalpie de fusion (delta Hm(2)) lors de la deuxième chauffe d'une DSC ISO soit au plus égale à 30 J/g, la masse étant rapportée à la quantité de motifs amides contenus ou de polyamide contenu, cette fusion correspondant à celle des motifs amides;
- ledit copolymère ait une température de transition vitreuse au moins égale à 75°C.

Par le terme «majoritairement », on entend «à raison de plus de 50% en poids (> 50%)».

Par l'expression «de façon minoritaire», on entend «à raison de moins de 50% en poids (< 50%)».

Par delta Hm(2), on entend l'enthalpie de fusion lors de la deuxième chauffe d'une DSC selon la norme ISO, la DSC ("Differential Scanning Calorimetry") étant l'analyse calorimétrique différentielle.

La ou les diamines cycloaliphatiques selon la présente invention sont avantageusement choisies parmi le bis-(3-méthyl-4-aminocyclohexyl)-méthane (BMACM), le para-aminodicyclohexyl méthane (PACM), l'isophoronediamine (IPD), le bis(4-aminocyclohexyl)-méthane (BACM), le 2,2-bis(3-méthyl-4-aminocyclohexyl)propane (BMACP), la 2,6-bis(amino méthyl)norbornane (BAMN).

Avantageusement, une seule diamine cycloaliphatique, en particulier le bis-(3-méthyl-4-aminocyclohexyl)-méthane a été utilisée comme diamine pour l'obtention des motifs amides.

Au moins une diamine non cycloaliphatique peut être entrée dans la composition des monomères des motifs amides, à raison d'au plus 30% en moles par rapport aux diamines de ladite composition. Comme diamine non cycloaliphatique, on peut citer les diamines aliphatiques linéaires, telles que la 1,4-tétraméthylène diamine, la 1,6-hexaméthylènediamine, la 1,9-nonadiamine et la 1,10-décaméthylènediamine.

Le ou les diacides carboxyliques aliphatiques peuvent être choisis parmi les diacides carboxyliques aliphatiques ayant de 6 à 36 atomes de carbone, de préférence de 9 à 18 atomes de carbone, en particulier l'acide 1,10-décanedicarboxylique (acide sébacique), l'acide 1,12-dodécanedicarboxylique, l'acide 1,14-tétradécanedicarboxylique et l'acide 1,18-octadécanedicarboxylique.

Au moins un diacide carboxylique non aliphatique peut être entré dans la composition des monomères des motifs amides à raison d'au plus 15% en moles par rapport aux diacides carboxyliques de ladite composition. De préférence, le diacide carboxylique non aliphatique est choisi parmi les diacides aromatiques, en particulier l'acide isophtalique (I), l'acide téréphtalique (T) et leurs mélanges.

Le lactame est, par exemple, choisi parmi le caprolactame, l'oenantholactame et le lauryllactame.

L'acide alpha-oméga aminocarboxylique est, par exemple, choisi parmi l'acide aminocaproïque, l'acide amino-7-heptanoïque, l'acide amino-11-undécanoïque ou l'acide amino-12-dodécanoïque.

Avantageusement, les blocs PA représentent 50 à 95% en poids dudit copolymère.

Les blocs PA sont, par exemple, choisis parmi: BMACM.9, BMACM.10, BMACM.12, BMACM.14, BMACM.18 et leurs mélanges.

La masse moléculaire en nombre des blocs PA est avantageusement comprise entre 500 et 12000 g/mole, de préférence entre 2000 et 6000 g/mole.

Les blocs PE (polyéther) sont, par exemple, issus d'au moins un polyalkylène éther polyol, notamment un polyalkylène éther diol, de préférence choisi parmi le polyéthylène glycol (PEG), le polypropylène glycol (PPG), le polytriméthylène glycol (PO3G), le polytétraméthylène glycol (PTMG) et leurs mélanges ou leurs copolymères.

Les blocs PE peuvent comprendre des séquences polyoxyalkylène à bouts de chaînes NH₂, de telles séquences pouvant être obtenues par cyanoacétylation de séquences polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 512, produits commerciaux de la société Huntsman. Voir également brevets JP 2004346274, JP 2004352794 et EP1482011).

La masse moléculaire en nombre des blocs PE est avantageusement comprise entre 200 et 4000 g/mole, de préférence entre 300 et 1100 g/mole.

Le copolymère selon l'invention peut être amorphe ou avoir une cristallinité telle que delta Hm(2) dudit copolymère est inférieur ou égal à 10 J/g.

Le copolymère selon l'invention peut également présenter une cristallinité intermédiaire telle que delta Hm(2) dudit copolymère soit compris entre 10 et 30 J/g, préférentiellement entre 10 et 25 J/g, la masse étant rapportée à la quantité de motifs amides contenus ou de polyamide contenu, cette fusion correspondant à celle des motifs amides. De tels matériaux sont des produits au comportement intermédiaire entre des polymères amorphes ou essentiellement amorphes, c'est-à-dire avec une enthalpie de fusion à la deuxième chauffe entre 0 et 10 J/g, qui ne sont plus à l'état solide au-dessus de leur Tg, et des polymères véritablement semi-cristallins, qui sont des polymères qui demeurent à l'état solide, donc qui conservent bien leur forme au-delà de leur Tg. Ces produits au comportement intermédiaire sont donc dans un état plus ou moins solide, mais aisément déformables au-delà de leur Tg. Comme leur Tg est élevée, dans la mesure où l'on ne les utilise pas au-delà de cette Tg, de tels matériaux sont intéressants, d'autant que leur tenue chimique est supérieure à celle des matériaux amorphes. L'Exemple 32 de la présente demande illustre de tels matériaux à comportement intermédiaire.

Le copolymère selon la présente invention peut avantageusement être transparent avec plus de 75% de transmission à 550 nm sur 2 mm d'épaisseur.

Le copolymère selon la présente invention peut avantageusement comprendre en outre au moins un additif choisi parmi les stabilisants thermiques, les stabilisants aux UV, les colorants, les agents de nucléation, les plastifiants, les agents améliorant la résistance aux chocs, ledit ou lesdits additifs ayant de préférence un indice de réfraction proche de celui dudit copolymère.

Une forme particulière de la présente invention consiste à choisir un copolymère caractérisé par le fait que ses motifs souples éthers sont choisis de nature très hydrophile, de préférence de nature bloc polyéther de type PEG, PPG ou PO3G, ce qui confère un surcroît avantageux de propriétés antistatiques et imper-respirantes à la composition (c'est à dire permettant le passage de la vapeur d'eau, mais pas de l'eau liquide). Cette composition peut être, de surcroît, additivée par des additifs antistatiques tiers afin de renforcer l'effet antistatique global, et aussi par des additifs permettant d'accroître la compatibilité de mélange avec d'autres polymères. Le copolymère, seul ou ainsi additivé, peut être ensuite utilisé en tant qu'additif d'un autre polymère ou matériau afin de conférer à ce dernier un surcroît de propriétés antistatique ou imper-respirantes.

La présente invention a également pour objet un procédé de préparation d'un copolymère tel que défini ci-dessus, caractérisé par le fait que :
- dans une première étape, on prépare les blocs polyamide PA par polycondensation
   ∘ de la ou des diamines ;
   ∘ du ou des diacides carboxyliques ; et
      le cas échéant, du ou des comonomères choisis parmi les lactames et les acides alpha-oméga aminocarboxyliques ;
   ∘ en présence d'un limiteur de chaîne choisi parmi les diacides carboxyliques ; puis
- dans une seconde étape, on fait réagir les blocs polyamide PA obtenus avec des blocs polyéther PE, en présence d'un catalyseur.

La méthode générale de préparation en deux étapes des copolymères de l'invention est connue et est décrite, par exemple, dans le brevet français FR 2 846 332 et dans le brevet européen EP 1 482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 15 mm Hg (2000 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

La présente invention a également pour objet un procédé de préparation d'un copolymère tel que défini ci-dessus, caractérisé par le fait que l'on ajoute tous les monomères au début, soit en une seule étape, pour effectuer la polycondensation :
- de la ou des diamines ;
- du ou des diacides carboxyliques ; et
- le cas échéant, de l'autre ou des autres comonomères de polyamide ;
- en présence d'un limiteur de chaîne choisi parmi les diacides carboxyliques ;
- en présence des blocs PE (polyéther) ;
- en présence d'un catalyseur pour la réaction entre les blocs PE et les blocs PA.

Avantageusement on utilise comme limiteur de chaîne ledit diacide carboxylique, que l'on introduit en excès par rapport à la stoechiométrie de la ou des diamines.

Avantageusement, on utilise, comme catalyseur, un dérivé d'un métal choisi dans le groupe formé par le titane, le zirconium et l'hafnium ou un acide fort tel que l'acide phosphorique, l'acide hypophosphoreux ou l'acide borique.

On peut conduire la polycondensation à une température de 240 à 280°C.

La présente invention a également pour objet un article façonné, tel que fibre, tissu, film, feuille, jonc, tube, pièce injectée, notamment transparent ou translucide, comprenant le copolymère tel que défini ci-dessus ou fabriqué par un procédé tel que défini ci-dessus.

Ainsi, le copolymère selon la présente invention est avantageux pour la fabrication aisée d'articles, en particulier d'articles ou éléments d'articles de sport, devant notamment présenter à la fois une bonne transparence, une bonne résistance au choc et une bonne endurance aux agressions mécaniques, chimiques, UV, thermiques. Parmi ces articles de sport, on peut citer des éléments de chaussures de sport, des ustensiles de sport tels que des patins à glace ou autres articles de sports d'hiver et d'alpinisme, des fixations de skis, des raquettes, des battes de sport, des planches, des fers à cheval, des palmes, des balles de golf, des véhicules de loisirs, en particulier ceux destinés aux activités par temps froid.

On peut également mentionner, d'une manière générale, les articles de loisirs, de bricolage, les outils et équipements de voirie soumis aux agressions climatiques et mécaniques, les articles de protection, tels que les visières des casques, les lunettes, ainsi que les branches de lunettes. On peut citer aussi, à titre d'exemples non limitatifs, les éléments de voiture, tels que protège-phares, rétroviseurs, petites pièces de voitures tout terrain, les réservoirs, en particulier, de cyclomoteurs, motos, scooters, soumis aux agressions mécaniques et chimiques, les articles cosmétiques soumis aux agressions mécaniques et chimiques, les bâtons de rouges à lèvres, les manomètres, les éléments de protection esthétiques tels que les bouteilles de gaz. De plus, concernant le domaine de la visserie, le PMMA étant particulièrement fragile, il est difficile de le visser. Une vis transparente dans un matériau assez mou sera susceptible d'éviter de faire casser le PMMA quand on forcera pour le visser.

Les exemples suivants illustrent la présente invention sans toutefois en limiter la portée.

Dans ces exemples, les pourcentages sont en poids sauf indication contraire et les abréviations suivantes ont été utilisées :
- BMACM: 3,3'diméthyl 4,4' diamino dicyclo hexyl méthane.
- PACM : 4,4' diamino dicyclo hexyl méthane, que l'on trouve avec des rapports d'isomères variables ; on peut ainsi distinguer la « PACM20 » d'Air Product et la PACM plus riche en isomère trans-trans, la Dicycan de BASF, qui contient plus de 45% d'isomère trans trans et que l'on appelera « PACM45 ».
- AT : acide téréphtalique.
- AI : acide isophtalique.
- C14 : acide tétra décanedioïque.
- C12 : acide dodécanedioïque.
- C10 : acide sébacique.
- C6 : acide adipique.
- PTMG : un polyéther, à savoir le poly-tétra-méthyl-glycol.
- PEG : poly-éthylène-glycol.
- PE : polyéther.
- Dans le cas de mélange de diacide, on indique leur proportion en mole (voir tableau 2).

On a préparé des copolymères selon le mode opératoire suivant :

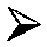 **COMPARATIFS 1 à 3 de Polyamides transparents** (voir **tableau 2** ci-dessous)

### Mode opératoire général :

On a préparé des PA à base de diamine cycloaliphatique en 1 étape selon le mode opératoire suivant :
Dans un autoclave de 80 l, on a chargé les différents monomères, plus 3% d'eau. Le réacteur fermé et purgé à l'azote, on a chauffé à 270°C sous pression et sous une agitation de 40 tpm. On a maintenu 3 heures puis, on a détendu jusqu'à pression atmosphérique en deux heures et on a continué la polycondensation sous azote à 280°C (voire 300°C) pendant environ 2 heures pour atteindre la viscosité désirée. Les produits ont été granulés. Les 25 kg de polymère obtenu ont été séchés à 90°C sous vide.

### COMPARATIF 4

Il s'agit de l'Exemple 1 décrit dans le brevet français FR 2 846 332 ayant des blocs PA 6/11/12. et des blocs PTMG.

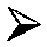 **EXEMPLES 6 à 10 selon l'invention** (voir **tableaux 1B et 2** ci-dessous) Mode opératoire général :

On a préparé des PEBA en 2 étapes à partir de blocs PA à base de diamine cycloaliphatique selon le mode opératoire suivant:
On a chargé de la diamine cycloaliphatique et des diacides dans un autoclave de 80l.

Le réacteur purgé à l'azote et fermé, on a chauffé à 260°C sous pression et sous agitation de 40 tpm. Après un maintien d'une heure, on a détendu sous pression atmosphérique et on a ajouté le polyéther et le catalyseur. On a mis le réacteur sous vide en 30 minutes pour atteindre 5 kPa (50 mbar) - 2 kPa (20 mbar) si nécessaire. La montée du couple a duré environ deux heures. La viscosité atteinte, le réacteur a été remis à pression atmosphérique et le produit a été granulé et séché sous vide à 75°C.

**Tableau 1B**

| | **Exemple 6** | **Exemple 7** | **Exemple 8** | **Exemple 9** | **Exemple 10** |
|---|---|---|---|---|---|
| **Monomère ou matière première** | Quantités chargées Kg | Quantités chargées Kg | Quantités chargées Kg | Quantités chargées Kg | Quantités chargées Kg |
| BMACM | 16,446 | 16,446 | 14,313 | 11,805 | 13,309 |
| | | | | | |
| C10 Acide sébacique | 15,085 | 6,967 | | | |
| C14 Acide Tétradécanedioïque | | | 17,039 | 8,126 | 8,117 |
| Acide Dodécanedioïque | | 9,27 | | 7,135 | 7,160 |
| | | | | | |
| PTMG 650 | 3,51 | 3,51 | 3,707 | 8,066 | |
| PTMG 1000 | | | | | 6,470 |
| Eau | 0,5 | 0,5 | 0,5 | 0,5 | 0,5 |
| Butylate de Zirconium en (g) | 45,5 | 45,5 | 45,5 | 45,5 | 45,5 |

Pour les autres exemples, on procède de façon semblable, ainsi que décrite dans le tableau 3, en 1 étape ou en 2 étapes selon le cas, le pourcentage de PE est exprimé en masse, les masses Mn des motifs PA et PE sont indiquées (colonnes "Mn PE", "Mn PA"), la composition du PA étant décrite en mol (colonnes "diamine", "diacide" exprimées en mol).

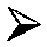 **EXEMPLES 11 à 32** (voir **tableau 3** ci-après)

### Mode opératoire général :

On a préparé des PEBA selon le mode opératoire suivant. Tous les monomères ont été introduits dans un réacteur en verre, plongé dans un bain d'huile et équipé d'un agitateur. Le mélange d'environ 60g de diamine cycloaliphatique, de diacide et de polyéthers ainsi formé a été mis sous atmosphère inerte et chauffé jusqu'à ce que la température atteigne 260°C. Après une polycondensation sous azote, d'environ 1 heure, on a ajouté le catalyseur Zr(OBu)₄ et on a mis sous vide (1 kPa à 5 kPa (10 à 50 mbar)) pour terminer la polymérisation à 260°C. Une fois la viscosité atteinte, on a remis le réacteur sous azote et on a refroidi.

### EXEMPLE 11 :

On a chargé en une étape : BMACM 27,1 g, diacide en C10 : 13,5g, diacide en C12 : 13,1 g, PTMG 650 : 6,4 g. L'ajout du catalyseur Zr(Obu)4 est de 0,4 ml. Le limitateur de chaîne est le diacide en C10. Le rapport molaire C10/C12 est 50/50.

Pour les copolymères des Exemples 1 à 10, des plaques de 100 x 100 x 2 mm ont été moulées par injection desdits copolymères à 270°C avec un moule froid à 10°C.

Pour les copolymères des Exemples 11 à 32, des pastilles ont été préparées par compression à 270°C sous presse.

Les propriétés optiques et mécaniques de ces plaques ou pastilles ont été mesurées (voir **tableaux 2** et **3**).

### DEFINITIONS des tableaux 2 et 3

h) Montée en viscosité : Elle représente l'aptitude à la polymérisation et en conséquence à l'obtention d'un polymère de masse suffisante, et donc de viscosité suffisante, ce qui se traduit par une augmentation du couple ou de la puissance du moteur d'agitation du polymériseur. Cette montée en viscosité se réalise sous azote ou sous vide. Cette montée en viscosité peut être possible (notée "oui" dans les tableaux qui suivent) ou pas(notée "non" dans les tableaux qui suivent).
i) Tg : Point d'inflexion ("Midpoint") au deuxième passage par DSC qui est une analyse thermique différentielle ou Differential Scanning Calorimetry ISO 11357.
j) Transparence: la transmission de la lumière à 560 nm est mesurée sur plaques de 2 mm. «TB» signifie que la transmission est >85% ; «B» signifie que la transmission est >80% et « AB» signifie que la transmission est >75%.
k) Opacité - Transparence: correspond au rapport de contraste et pourcentage de lumière transmise ou réfléchie à la longueur d'onde de 560 nm sur une plaque de 2 mm d'épaisseur.
l) MFI (indice de fluidité à l'état fondu) mesuré à 275°C, 2,16 kg : Plus le MFI est élevé, plus la synthèse du copolymère est facile.
m) Rigidité (et souplesse) : Elle est caractérisée par la mesure du module de flexion sur barreau de 80*10*4mm selon la norme ISO178. Elle est aussi caractérisée par la mesure du module E' obtenu lors d'un test de DMA qui est une analyse mécanique différentielle ou Differential Mechanical Analysis ISO 6721.
n) Elasticité et fatigue : le coefficient a (alpha) est déterminé graphiquement au cours d'une analyse de nervosité (amplitude en fonction du temps). Plus la valeur est élevée, plus le matériau est nerveux et élastique. La tenue en fatigue est caractérisée par un test de Ross-Flex ASTM1052 à -10°C sur une éprouvette non percée qu'on plie alternativement à 90°, on mesure le nombre de cycles endurés avant casse.
o) Allongement à la rupture (%) : On mesure la traction sur éprouvette de type haltère selon la norme ISOR527.
p) Viscosité : La viscosité inhérente en dl/g est mesurée à partir de 0,5g de produit solubilisé à 25°C dans le métacrésol.
g) Jaunissement : On mesure l'indice de jaune (Yellow index) sur granulés (tableau 2) ou on l'estime qualitativement (tableau 3) : "0" correspond à pas de jaunissement, "+" à un léger jaune, "++" à un jaunissement significatif.
r) Semi-cristallin : un polymère semi-cristallin, notamment un polyamide, est un polymère ayant une température de fusion avec une enthalpie de fusion significative (notée deltaHm(2)), supérieure à 10J/g, préférentiellement supérieure à 25j/g (mesure réalisée lors d'une DSC ISO, lors de la deuxième chauffe), ce qui signifie que le polymère conserve un état essentiellement solide au-delà de sa température de transition vitreuse (Tg).
s) Amorphe : un polymère amorphe, notamment un polyamide, est un polymère n'ayant pas de point de fusion ou ayant un point de fusion peu marqué, c'est-à-dire avec une enthalpie de fusion inférieure à 10 J/g, mesure réalisée lors d'une DSC ISO, lors de la deuxième chauffe. Ce polymère quitte donc son état solide au-delà de sa température de transition vitreuse (Tg).
t) Antistatisme : On caractérise l'antistatisme par une mesure de résistivité superficielle (ohm) selon ASTM D257 à 20°C sous 65% d'humidité relative, sous une tension continue de 100V.
u) Imper-respirabilité ou perméabilité à la vapeur d'eau : Elle est estimée selon la norme ASTM 96 E BW à 38°C et 50% d'humidité relative sur un film de 25µm d'épaisseur.
v) Test de tenue choc / pliure. Le test est réalisé de la façon suivante. Des barreaux 80 x 10 x 4 mm sont moulés par injection dans un moule ISO. Le barreau est plié rapidement à 180° au niveau du seuil d'injection, entre le barreau et la grappe, là où l'épaisseur est réduite à 1 mm environ. On mesure ensuite le nombre de casse franche sur une série de 20 barreaux, et on l'exprime en pourcentage de casse.

La tenue chimique a également été testée et a montré une tenue à 100% dans l'éthanol et dans l'acétone pour le copolymère de l'Exemple 7.

Ces essais montrent que les copolymères de la présente invention peuvent être aussi transparents que les polyamides de l'état antérieur de la technique tout en ayant une plus grande flexibilité.

L'exemple 32 constitue un cas particulier avantageux. Il est caractérisé par le fait que les motifs souples éthers sont choisis de nature très hydrophile, de type, ce qui confère des propriétés antistatiques et imper-respirantes (c'est à dire permettant le passage de la vapeur d'eau, mais pas de l'eau liquide) à la composition. Cette composition peut être de surcroît additivée par des additifs antistatiques tiers afin de renforcer l'effet antistatique global, et par des additifs permettant d'accroître la compatibilité de mélange avec d'autres polymères, le copolymère, seul ou ainsi additivé, pouvant en effet être ensuite utilisé en tant qu'additif d'un autre polymère ou matériau afin de lui conférer à celui-ci une amélioration de ses propriétés antistatiques ou imper-respirantes. Si le polymère additivé est transparent, alors, avantageusement, on choisira les monomères PA (et autres additifs) de telle sorte que l'indice de réfraction de notre copolymère (éventuellement lui même additivé) soit très proche de celui du polymère additivé. Les exemples 30 et 31 ne font pas partie des exemples selon les revendications.

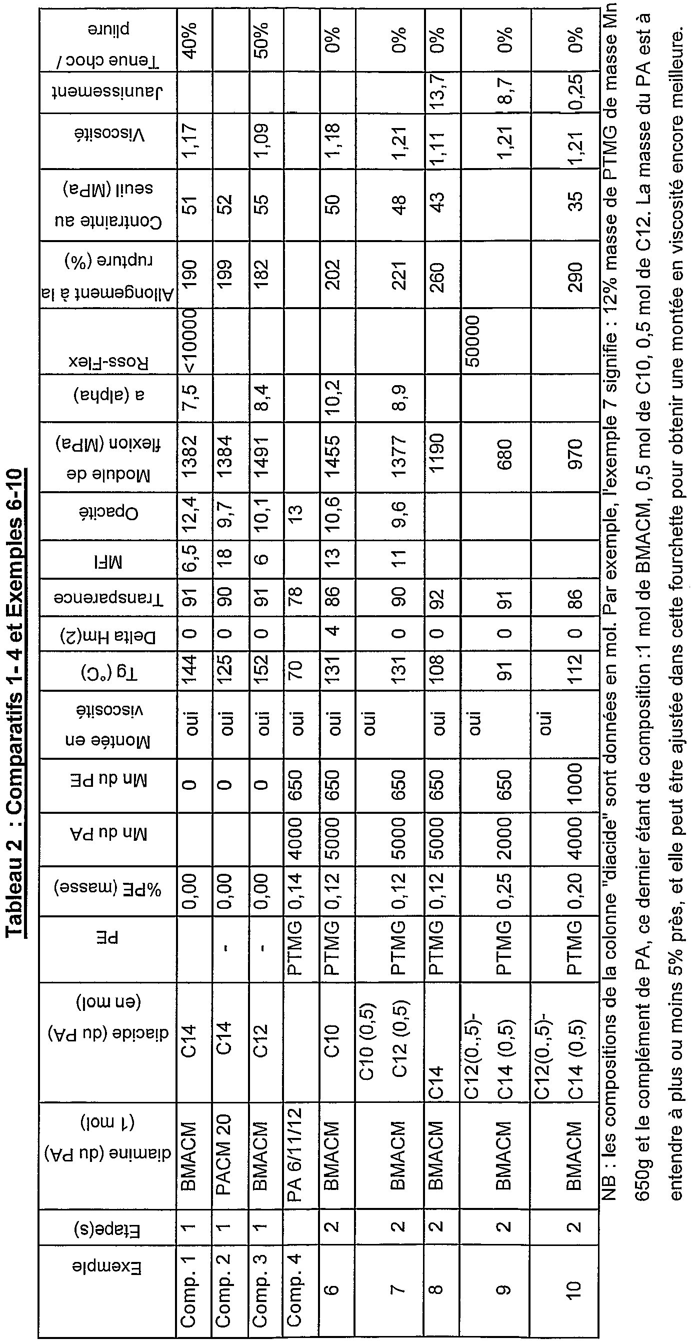

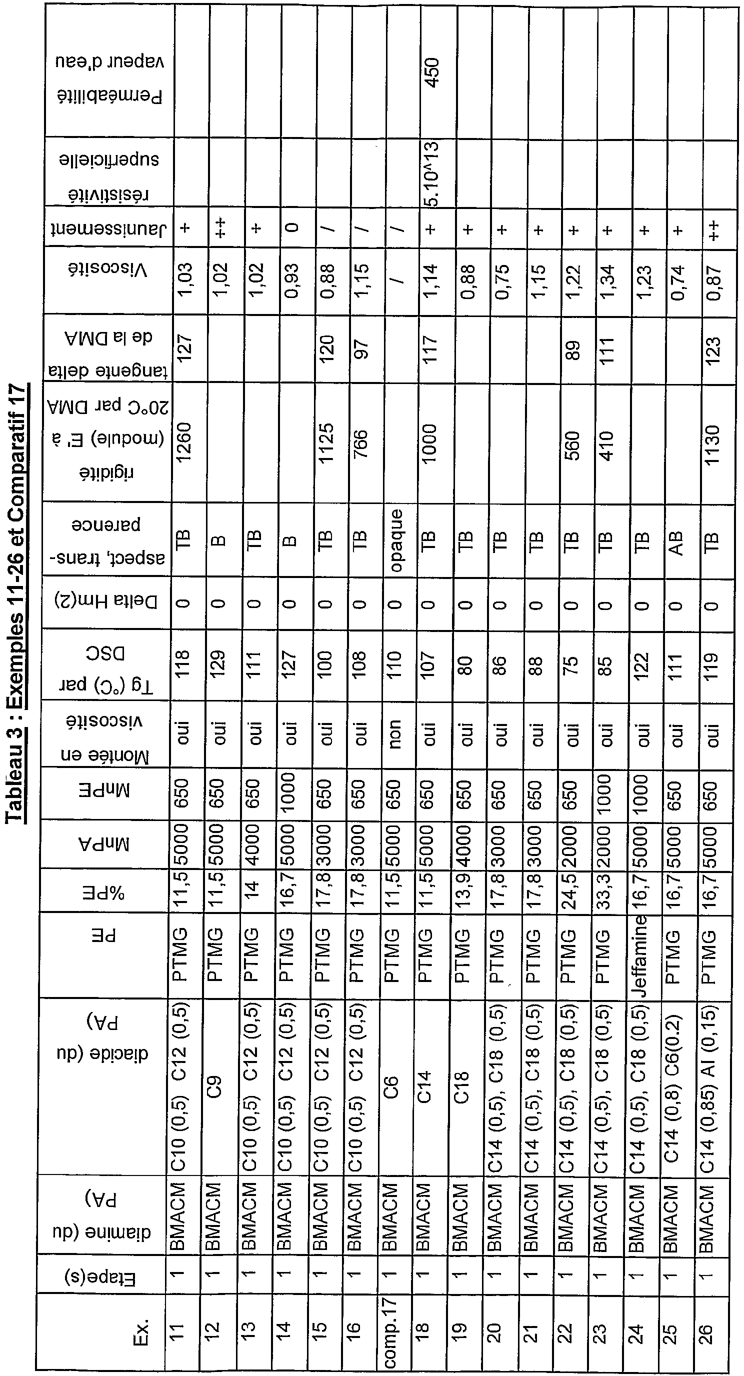

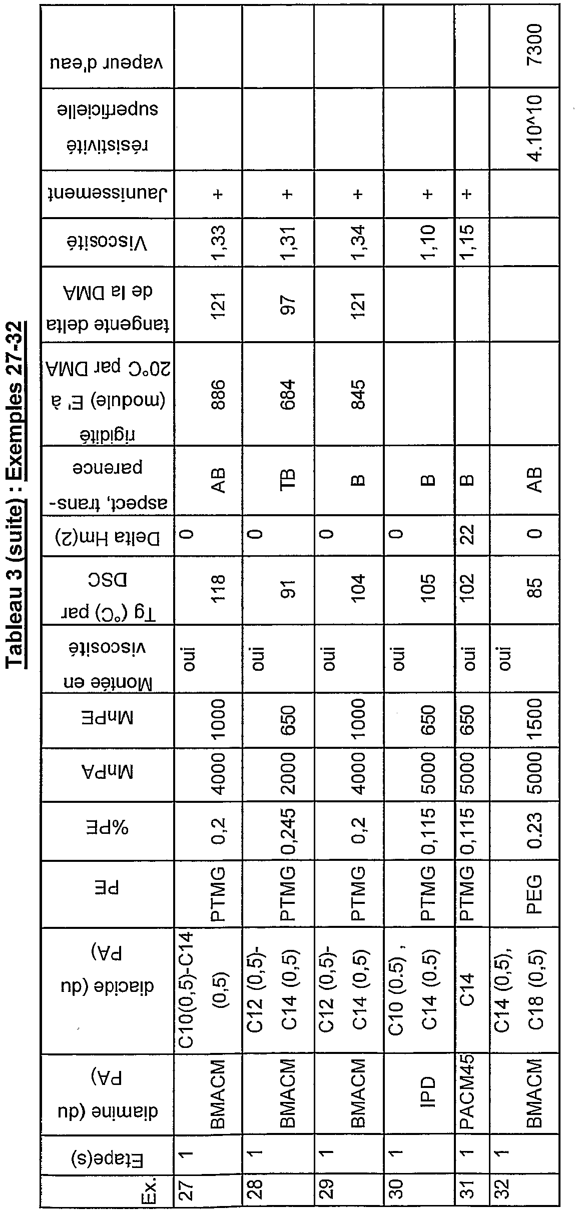

### Application : Montures de lunettes

Des montures de lunettes ont été moulées (monture 1 et monture 2) en utilisant certains des copolymères produits ci-dessus. Les propriétés des produits obtenus sont présentées dans le **Tableau 4** ci-dessous.

**Tableau 4**

| **Monture** | **1** | **2** |
|---|---|---|
| Matériau (Exemple) | Comp. 3 | exemple 7 |
| Température du moule (°C) | 90 | 70 |
| Température de la matière (°C) | 290 | 275 |
| Temps de maintien (s) | 6 | 4 |
| Temps de refroidissement (s) | 8 | 8 |
| Temps de cycle (s) | 15 | 13 |
| Présence de Bulles | oui | non |
| Aspect | | bon, léger jaunissement |
| Toucher | doux | très doux |

Des tests ont également été effectués pour évaluer la résistance au choc des copolymères de l'invention. Des barreaux 80 x 10 x 4 mm ont été moulés par injection à partir de matériaux du Tableau 1. Des séries de 16 barreaux ont été pliées sur grappes pour mesurer le nombre de barreaux cassés. Un test a été mis au point à partir de grappes de barreaux 80*10*4 fabriqués en utilisant certains des copolymères produit ci-dessus: on plie à 180° les barreaux au niveau de leur point d'injection (là où l'épaisseur réduite sous forme d'indentation) et on note le pourcentage de casse. Les résultats sont présentés dans le **Tableau 5** ci-dessous, en %.

**Tableau 5**

| **Barreau** | **% de non cassé** |
|---|---|
| Comp. 3 | 50 à 60% |
| exemple 7 | 100% |

Ces résultats montrent que les copolymères de l'invention permettent d'allier à la fois une bonne maîtrise de la synthèse et de bonnes conditions de moulage (température du moule plus faible, pas de bulles, bonne viscosité...) avec de bonnes propriétés optiques (transparence) et mécaniques (très bonnes flexibilité et résistance au choc).

## Revendications

1. Copolymère à base de motifs amides et à base de motifs éthers, les motifs amides étant constitués à raison de plus de 50% en poids d'une association équimolaire d'au moins une diamine et d'au moins un diacide carboxylique, la ou les diamines étant à raison de plus de 50% en poids cycloaliphatiques et le ou les diacides carboxyliques étant à raison de plus de 50% en poids aliphatiques linéaires, les motifs amides pouvant éventuellement comprendre, mais à raison de moins de 50% en poids, au moins un autre comonomère de polyamide,
la ou les diamines cycloaliphatiques sont choisies parmi le bis-(3-méthyl-4-aminocyclohexyl)-méthane (BMACM), le 2,2-bis(3-méthyl-4-aminocyclohexyl)propane (BMACP), la 2,6-bis(amino méthyl)norbornane (BAMN).
les proportions respectives de monomères des motifs éthers et amides étant choisies de telle sorte que :
- ledit copolymère présente une transparence élevée qui est telle que la transmittance à 560 nm sur plaque de 2 mm d'épaisseur est supérieure à 75% ;
- ledit copolymère est amorphe ou présente une cristallinité telle que l'enthalpie de fusion lors de la deuxième chauffe d'une DSC ISO (delta Hm(2)) soit au plus égale à 30 J/g, la masse étant rapportée à la quantité de motifs amides contenus ou de polyamide contenu, cette fusion correspondant à celle des motifs amide ;
- ledit copolymère ait une température de transition vitreuse au moins égale à 75°C par DSC (Differential Scanning Calorimetry) et ISO 11357.

2. Copolymère selon la revendication 1, **caractérisé par le fait qu'**une seule diamine cycloaliphatique, en particulier le bis-(3-méthyl-4-aminocyclohexyl)-méthane, a été utilisée comme diamine pour l'obtention des motifs amides.

3. Copolymère selon la revendication 1, **caractérisé par le fait qu'**au moins une diamine non cycloaliphatique est entrée dans la composition des monomères des motifs amides à raison d'au plus 30% en moles par rapport aux diamines de ladite composition.

4. Copolymère selon l'une des revendications 1 à 3, **caractérisé par le fait que** le ou les diacides carboxyliques aliphatiques sont choisis parmi les diacides carboxyliques aliphatiques ayant de 6 à 36 atomes de carbone, de préférence de 9 à 18 atomes de carbone, en particulier l'a cide 1,10-décanedicarboxylique, l'acide 1,12-dodécanedicarboxylique, l'acide 1,14-tétradécanedicarboxylique et l'acide 1,18-octadécanedicarboxylique.

5. Copolymère selon l'une des revendications 1 à 4, **caractérisé par le fait qu'**au moins un diacide carboxylique non aliphatique est entré dans la composition des monomères des motifs amides à raison d'au plus 15% en moles par rapport aux diacides carboxyliques de ladite composition.

6. Copolymère selon la revendication 5, **caractérisé par le fait que** le diacide carboxylique non aliphatique est choisi parmi les diacides aromatiques, en particulier l'acide isophtalique (I), l'acide téréphtalique (T) et leurs mélanges.

7. Copolymère selon l'une des revendications 1 à 6, **caractérisé par le fait que** le ou les monomères entrant à raison de moins de 50% en poids dans la composition des monomères des motifs amides sont choisis parmi les lactames et les acides alpha-oméga aminocarboxyliques.

8. Copolymère selon la revendication 7, **caractérisé par le fait que** le ou les lactames sont choisis parmi les lactames ayant au moins 6 carbones, en particulier le caprolactame, l'oenantholactame et le lauryllactame.

9. Copolymère selon la revendication 7, **caractérisé par le fait que** le ou les acides alpha-oméga aminocarboxyliques sont choisis parmi ceux ayant au moins 6 carbones, en particulier l'acide aminocaproïque, l'acide amino-7-heptanoïque, l'acide amino-11-undécanoïque ou l'acide amino-12-dodécanoïque.

10. Copolymère selon l'une des revendications 1 à 9, **caractérisé par le fait que** les motifs amides représentent 50 à 95% en poids dudit copolymère.

11. Copolymère selon l'une des revendications 1 à 10, **caractérisé par le fait qu'**il compte des motifs amides dont le nombre de carbones par amide est en moyenne au moins égal à 9.

12. Copolymère selon l'une des revendications 1 à 11, qui est un copolymère à blocs polyamide PA - polyéther PE, **caractérisé par le fait que** les blocs PA sont choisis parmi BMACM,9, BMACM,10, BMACM,12, BMACM,14, BMACM,18 et leurs mélanges ou copolymères.

13. Copolymère selon l'une des revendications 1 à 12, qui est un copolymère à blocs polyamide PA - polyéther PE, **caractérisé par le fait que** les blocs PE sont issus d'au moins un polyalkylène éther polyol, notamment un polyalkylène éther diol.

14. Copolymère selon la revendication 13, **caractérisé par le fait que** le polyalkylène éther diol est choisi parmi le polyéthylène glycol (PEG), le polypropylène glycol (PPG), le polytriméthylène glycol (PO3G), le polytétraméthylène glycol (PTMG) et leurs mélanges ou leurs copolymères.

15. Copolymère selon l'une des revendications 1 à 14, qui est un copolymère à blocs polyamide PA - polyéther PE, **caractérisé par le fait que** les blocs polyéther comprennent des séquences polyoxyalkylène à bouts de chaînes NH₂.

16. Copolymère selon l'une des revendications 1 à 15, **caractérisé par le fait que** la température de transition vitreuse dudit polymère est au moins égale à 90°C.

17. Copolymère selon l'une des revendications 1 à 16, **caractérisé par le fait qu'**il a une cristallinité telle que l'enthalpie de fusion lors de la deuxième chauffe d'une DSC ISO (delta Hm(2)) soit inférieure ou égale à 10 J/g, la masse étant rapportée à la quantité de motifs amides contenus ou de polyamide contenu.

18. Copolymère selon l'une des revendications 1 à 16, **caractérisé par le fait qu'**il a une cristallinité telle que l'enthalpie de fusion lors de la deuxième chauffe d'une DSC ISO (delta Hm(2)) soit comprise entre 10 et 30 J/g, préférentiellement entre 10 et 25 J/g, la masse étant rapportée à la quantité de motifs amides contenus ou de polyamide contenu, cette fusion correspondant à celle des motifs amides.

19. Copolymère selon l'une des revendications 1 à 18, **caractérisé par le fait qu'**il comprend en outre au moins un additif choisi parmi les stabilisants thermiques, les stabilisants aux UV, les colorants, les agents de nucléation, les plastifiants, les agents améliorant la résistance aux chocs, ledit ou lesdits additifs ayant de préférence un indice de réfraction proche de celui dudit copolymère.

20. Copolymère selon l'une des revendications 1 à 19, qui est un copolymère **caractérisé par le fait que** les motifs souples éthers sont choisis de nature très hydrophile, de préférence de nature bloc polyéther de type PEG ou ses copolymères avec du PPG ou du PO3G, ce qui confère des propriétés antistatiques et imper-respirantes (c'est à dire permettant le passage de la vapeur d'eau, mais non de l'eau liquide) à la composition, cette composition pouvant être de surcroît additivée par des additifs antistatiques tiers afin de renforcer l'effet antistatique global, et par des additifs permettant d'accroître la compatibilité de mélange avec d'autres polymères, le copolymère, seul ou ainsi additivé, pouvant en effet être ensuite utilisé en tant qu'additif d'un autre polymère ou matériau afin de lui conférer un surcroît de propriétés antistatique ou imper-respirantes.

21. Procédé de préparation d'un copolymère tel que défini à l'une des revendications 1 à 20, ledit polymère se présentant sous la forme de blocs polyamide PA - polyéther PE, **caractérisé par le fait que** :
- dans une première étape, on prépare des blocs polyamide PA par polycondensation
∘ de la ou des diamines ;
∘ du ou des diacides carboxyliques ; et
le cas échéant, de l'autre ou des autres comonomères de polyamide ;
∘ en présence d'un limiteur de chaîne choisi parmi les diacides carboxyliques ; puis
- dans une seconde étape, on fait réagir les blocs polyamide PA obtenus avec des blocs polyéther PE, en présence d'un catalyseur.

22. Procédé de préparation d'un copolymère tel que défini à l'une des revendications 1 à 20, ledit polymère se présentant sous la forme de blocs polyamide PA - polyéther PE, **caractérisé par le fait que** l'on conduit une polycondensation en une étape
- de la ou des diamines ;
- du ou des diacides carboxyliques ; et
- le cas échéant, de l'autre ou des autres comonomères de polyamide ;
- en présence d'un limiteur de chaîne choisi parmi les diacides carboxyliques ;
- en présence des blocs PE ;
- en présence d'un catalyseur pour la réaction entre les blocs PE (polyéther) et les blocs PA.

23. Procédé de préparation selon l'une des revendications 21 et 22, **caractérisé par le fait que** l'on utilise comme limiteur de chaîne ledit diacide carboxylique, que l'on introduit en excès par rapport à la stoechiométrie de la ou des diamines.

24. Procédé de préparation selon l'une des revendications 21 à 23, **caractérisé par le fait que** l'on utilise, comme catalyseur, un dérivé d'un métal choisi dans le groupe formé par le titane, le zirconium et l'hafnium ou un acide fort tel que l'acide phosphorique, l'acide hypophosphoreux ou l'acide borique.

25. Procédé de préparation selon l'une des revendications 21 à 24, **caractérisé par le fait que** l'on conduit la polycondensation à une température de 240 à 280 °C.

26. Article façonné, tel que fibre, tissu, film, feuille, jonc, tube, pièce injectée, notamment transparent ou translucide, comprenant le copolymère tel que défini à l'une des revendications 1 à 20, ou préparé par un procédé tel que défini à l'une des revendications 21 à 25.

27. Article façonné selon la revendication 26, **caractérisé par le fait qu'**il consiste en un article ou élément d'article de sport, tel qu'élément de chaussure de sport, ustensile de sport tel que patins à glace, fixations de skis, raquettes, battes de sports, planches, fers à cheval, palmes, balles de golf, en un article de loisirs, de bricolage, en un outil ou équipement de voirie soumis aux agressions climatiques et mécaniques, en un article de protection tel que visières de casques, lunettes, branches de lunettes, en un élément de voiture tel que protège-phares, rétroviseurs, petites pièces de voitures tout terrain, réservoirs, en particulier de scooters, cyclomoteurs, motos.

## Patentansprüche

1. Copolymer auf Basis von Amid-Einheiten und auf Basis von Ether-Einheiten, wobei die Amid-Einheiten in einem Anteil von mehr als 50 Gew.-% aus einer äquimolaren Kombination von mindestens einem Diamin und mindestens einer Dicarbonsäure bestehen, wobei das Diamin bzw. die Diamine in einem Anteil von mehr als 50 Gew.-% cycloaliphatisch ist bzw. sind und die Dicarbonsäure bzw. die Dicarbonsäuren in einem Anteil von mehr als 50 Gew.-% linear aliphatisch ist bzw. sind, wobei die Amid-Einheiten gegebenenfalls, aber in einem Anteil von weniger als 50 Gew.-%, mindestens ein anderes Polyamid-Comonomer umfassen können, wobei das cycloaliphatische Diamin bzw. die cycloaliphatischen Diamine aus Bis(3-methyl-4-aminocyclohexyl)methan (BMACM), 2,2-Bis(3-methyl-4-aminocyclohexyl)propan (BMACP) und 2,6-Bis-(aminomethyl)norbornan (BAMN) ausgewählt ist bzw. sind,
wobei die jeweiligen Anteile von Monomeren der Ether- und Amid-Einheiten so gewählt sind, dass
- das Copolymer eine hohe Transparenz zeigt, die derart ist, dass die Durchlässigkeit bei 560 nm durch eine Platte mit einer Dicke von 2 mm größer als 75 % ist;
- das Copolymer amorph ist oder eine derartige Kristallinität aufweist, dass die Schmelzenthalpie während des zweiten Erhitzens eines ISO-DSC (Delta Hm(2)) höchstens gleich 30 J/g ist, wobei sich die Masse auf die Menge von enthaltenen Amid-Einheiten oder enthaltenem Polyamid bezieht, wobei dieses Schmelzen dem Schmelzen der Amid-Einheiten entspricht;
- das Copolymer eine Glasübergangstemperatur von mindestens 75 °C gemäß DSC (Differential Scanning Calorimetry) und ISO 11357 aufweist.

2. Copolymer nach Anspruch 1, **dadurch gekennzeichnet, dass** ein einziges cycloaliphatisches Diamin, insbesondere Bis(3-methyl-4-aminocyclohexyl)-methan, als Diamin zum Erhalt der Amid-Einheiten verwendet wurde.

3. Copolymer nach Anspruch 1, **dadurch gekennzeichnet, dass** mindestens ein nicht cycloaliphatisches Diamin in die Zusammensetzung der Monomere der Amid-Einheiten in einem Anteil von höchstens 30 Mol-%, bezogen auf die Diamine der Zusammensetzung, Eingang findet.

4. Copolymer nach einem der Ansprüche 1 bis 3, **dadurch gekennzeichnet, dass** die aliphatische Dicarbonsäure bzw. die aliphatischen Dicarbonsäuren aus aliphatischen Dicarbonsäuren mit 6 bis 36 Kohlenstoffatomen, vorzugsweise 9 bis 18 Kohlenstoffatomen, insbesondere 1,10-Decandicarbonsäure, 1,12-Dodecandicarbonsäure, 1,14-Tetradecandicarbonsäure und 1,18-Octacecandicarbonsäure, ausgewählt ist bzw. sind.

5. Copolymer nach einem der Ansprüche 1 bis 4, **dadurch gekennzeichnet, dass** mindestens eine nicht aliphatische Dicarbonsäure in die Zusammensetzung der Monomere der Amid-Einheiten in einem Anteil von höchstens 15 Mol-%, bezogen auf die Dicarbonsäuren der Zusammensetzung, Eingang findet.

6. Copolymer nach Anspruch 5, **dadurch gekennzeichnet, dass** die nicht aliphatische Dicarbonsäure aus aromatischen Disäuren, insbesondere Isophthalsäure (I), Terephthalsäure (T) und Mischungen davon, ausgewählt ist.

7. Copolymer nach einem der Ansprüche 1 bis 6, **dadurch gekennzeichnet, dass** das Monomer bzw. die Monomere, das bzw. die in einem Anteil von weniger als 50 Gew.-% in die Zusammensetzung der Monomere der Amid-Einheiten Eingang findet bzw. finden, aus Lactamen und alpha,omega-Aminocarbonsäuren ausgewählt ist bzw. sind.

8. Copolymer nach Anspruch 7, **dadurch gekennzeichnet, dass** das Lactam bzw. die Lactame aus Lactamen mit mindestens 6 Kohlenstoffatomen, insbesondere Caprolactam, in Oenantholactam und Lauryllactam, ausgewählt ist bzw. sind.

9. Copolymer nach Anspruch 7, **dadurch gekennzeichnet, dass** die alpha,omega-Aminocarbonsäure bzw. die alpha,omega-Aminocarbonsäuren aus denjenigen mit mindestens 6 Kohlenstoffatomen, insbesondere Aminocapronsäure, 7-Aminoheptansäure, 11-Aminoundecansäure oder 12-Aminododecansäure, ausgewählt ist bzw. sind.

10. Copolymer nach einem der Ansprüche 1 bis 9, **dadurch gekennzeichnet, dass** die Amid-Einheiten 50 bis 95 Gew.-% des Copolymers ausmachen.

11. Copolymer nach einem der Ansprüche 1 bis 10, **dadurch gekennzeichnet, dass** es Amid-Einheiten enthält, deren Zahl von Kohlenstoffatomen pro Amid im Mittel mindestens gleich 9 ist.

12. Copolymer nach einem der Ansprüche 1 bis 11, bei dem es sich um ein Copolymer mit Polyamid-PA/Polyether-PE-Blöcken handelt, **dadurch gekennzeichnet, dass** die PA-Blöcke aus BMCAM,9, BMCAM,10, BMCAM,12, BMCAM,14, BMCAM,18 und Mischungen oder Copolymeren davon ausgewählt sind.

13. Copolymer nach einem der Ansprüche 1 bis 12, bei dem es sich um ein Copolymer mit Polyamid-PA/Polyether-PE-Blöcken handelt, **dadurch gekennzeichnet, dass** die PE-Blöcke aus mindestens einem Polyalkylenetherpolyol, insbesondere einem Polyalkylenetherdiol, stammen.

14. Copolymer nach Anspruch 13, **dadurch gekennzeichnet, dass** das Polyalkylenetherdiol aus Polyethylenglykol (PEG), Polypropylenglykol (PPG), Polytrimethylenglykol (PO3G), Polytetramethylenglykol (PTMG) und Mischungen davon oder Copolymeren davon ausgewählt ist.

15. Copolymer nach einem der Ansprüche 1 bis 14, bei dem es sich um ein Copolymer mit Polyamid-PA-Polyether-PE-Blöcken handelt, **dadurch gekennzeichnet, dass** die Polyetherblöcke Polyoxyalkylensequenzen mit NH₂-Kettenenden umfassen.

16. Copolymer nach einem der Ansprüche 1 bis 15, **dadurch gekennzeichnet, dass** die Glasübergangstemperatur des Polymers mindestens gleich 90 °C ist.

17. Copolymer nach einem der Ansprüche 1 bis 16, **dadurch gekennzeichnet, dass** es eine derartige Kristallinität aufweist, dass die Schmelzenthalpie während des zweiten Erhitzens eines ISO-DSC (Delta Hm(2)) kleiner oder gleich 10 J/g ist, wobei sich die Masse auf die Menge von enthaltenen Amid-Einheiten oder enthaltenem Polyamid bezieht.

18. Copolymer nach einem der Ansprüche 1 bis 16, **dadurch gekennzeichnet, dass** es eine derartige Kristallinität aufweist, dass die Schmelzenthalpie während des zweiten Erhitzens eines ISO-DSC (Delta Hm(2)) zwischen 10 und 30 J/g, vorzugsweise zwischen 10 und 25 J/g, liegt, wobei sich die Masse auf die Menge von enthaltenen Amid-Einheiten oder enthaltenem Polyamid bezieht, wobei dieses Schmelzen dem Schmelzen der Amid-Einheiten entspricht.

19. Copolymer nach einem der Ansprüche 1 bis 18, **dadurch gekennzeichnet, dass** es außerdem mindestens ein Additiv umfasst, das aus Wärmestabilisatoren, UV-Stabilisatoren, Farbmitteln, Nukleierungsmitteln, Weichmachern oder Schlagzähigkeitsverbesserern ausgewählt ist, wobei das Additiv bzw. die Additive vorzugsweise einen ähnlichen Brechungsindex wie das Copolymer aufweist bzw. aufweisen.

20. Copolymer nach einem der Ansprüche 1 bis 19, bei dem es sich um ein Copolymer handelt, das **dadurch gekennzeichnet ist, dass** die flexiblen Ether-Einheiten so gewählt sind, dass sie sehr hydrophil und vorzugsweise vom Typ Polyetherblock von PEG oder Copolymeren davon mit PPG oder PO3G sind, was der Zusammensetzung antistatische und atmungsaktive (d. h. Wasserdampf, aber nicht flüssiges Wasser durchlassende) Eigenschaften verleiht, wobei diese Zusammensetzung darüber hinaus zur Verstärkung des antistatischen Effekts insgesamt mit antistatischen Additiven Dritter und mit Additiven, die eine Erhöhung der Mischungsverträglichkeit mit anderen Polymeren erlauben, additiviert sein kann, wobei das Copolymer für sich alleine oder so additiviert danach faktisch als Additiv für ein anderes Polymer oder Material verwendet werden kann, um dessen antistatische oder atmungsaktive Eigenschaften zu verbessern.

21. Verfahren zur Herstellung eines Copolymers gemäß einem der Ansprüche 1 bis 20, wobei das Polymer in Form von Polyamid-PA-Polyether-PE-Blöcken vorliegt, **dadurch gekennzeichnet, dass** man
- in einem ersten Schritt durch Polykondensation
∘ des Diamins bzw. der Diamine;
∘ der Dicarbonsäure bzw. der Dicarbonsäuren und gegebenenfalls des anderen Polyamid-Comonomers bzw. der anderen Polyamid-Comonomere
∘ in Gegenwart eines Kettenabbruchmittels, das aus Dicarbonsäuren ausgewählt ist, Polyamid-PA-Blöcke herstellt und dann
- in einem zweiten Schritt die erhaltenen Polyamid-PA-Blöcke in Gegenwart eines Katalysators mit Polyether-PE-Blöcken umsetzt.

22. Verfahren zur Herstellung eines Copolymers gemäß einem der Ansprüche 1 bis 20, wobei das Polymer in Form von Polyamid-PA-Polyether-PE-Blöcken vorliegt, **dadurch gekennzeichnet, dass** man in einem Schritt eine Polykondensation
- des Diamins bzw. der Diamine;
- der Dicarbonsäure bzw. der Dicarbonsäuren und
- gegebenenfalls des anderen Polyamid-Comonomers bzw. der anderen Polyamid-Comonomere
- in Gegenwart eines Kettenabbruchmittels, das aus Dicarbonsäuren ausgewählt ist,
- in Gegenwart der PE-Blöcke
- in Gegenwart eines Katalysators für die Reaktion zwischen den PE(Polyether)-Blöcken und den PA-Blöcken
durchführt.

23. Herstellungsverfahren nach einem der Ansprüche 21 und 22, **dadurch gekennzeichnet, dass** man als Kettenabbruchmittel die Dicarbonsäure verwendet, die man im Überschuss zur Stöchiometrie des Diamins bzw. der Diamine einträgt.

24. Herstellungsverfahren nach einem der Ansprüche 21 bis 23, **dadurch gekennzeichnet, dass** man als Katalysator ein Derivat eines Metalls aus der Gruppe bestehend aus Titan, Zirconium und Hafnium oder eine starke Säure wie Phosphorsäure, hypophosphorige Säure oder Borsäure verwendet.

25. Herstellungsverfahren nach einem der Ansprüche 21 bis 24, **dadurch gekennzeichnet, dass** man die Polykondensation bei einer Temperatur von 240 bis 280° durchführt.

26. Formkörper, wie Faser, Gewebe, Film, Folie, Stab, Rohr oder Spritzgussteil, insbesondere transparenter oder durchscheinender Formkörper, umfassend das Copolymer gemäß einem der Ansprüche 1 bis 20 oder das nach dem Verfahren gemäß einem der Ansprüche 21 bis 25 hergestellte Copolymer.

27. Formkörper nach Anspruch 26, **dadurch gekennzeichnet, dass** er aus einem Sportartikel oder Sportartikelelement, wie einem Sportschuhelement, einem Sportgerät wie Schlittschuhen, Skibindungen, Schlägern, Brettern, Hufeisen, Schwimmflossen, Golfbällen, einem Freizeitartikel, einem Bastelartikel, einem Werkzeug oder einer Einrichtung für Verkehrswege, das bzw. die klimatischen oder mechanischen Belastungen ausgesetzt ist, einem Schutzartikel wie Helm- oder Kappenvisieren, Brillen, Brillenbügeln, einem Element eines Fahrzeugs, wie Scheinwerferschutzmitteln, Rückspiegeln, kleinen Teilen für Geländefahrzeuge, Tanks, insbesondere von Motorrollern, Mopeds und Motorrädern besteht.

## Claims

1. Copolymer based on amide units and based on ether units, the amide units consisting, in a proportion of more than 50% by weight, of an equimolar combination of at least one diamine and of at least one dicarboxylic acid, the diamine(s) being, in a proportion of more than 50% by weight, cycloaliphatic diamine(s) and the dicarboxylic acid(s) being, in a proportion of more than 50% by weight, linear aliphatic dicarboxylic acid(s), it being possible for the amide units to optionally comprise, but in a proportion of less than 50% by weight, at least one other polyamide comonomer,
the cycloaliphatic diamine(s) being chosen from bis(3-methyl-4-aminocyclohexyl)methane (BMACM), 2,2-bis(3-methyl-4-aminocyclohexyl)propane (BMACP) or 2,6-bis(aminomethyl)norbornane (BAMN),
the respective proportions of monomers of the ether and amide units being chosen so that:
- the said copolymer exhibits a high transparency which is such that the transmission at 560 nm through a sheet with a thickness of 2 mm is greater than 75%;
- the said copolymer is amorphous and exhibits a crystallinity such that the enthalpy of fusion during the second heating of an ISO DSC (delta Hm(2)) is at most equal to 30 J/g, the weight being with respect to the amount of amide units present or of polyamide present, this melting corresponding to that of the amide units;
- the said copolymer has a glass transition temperature at least equal to 75°C by DSC (Differential Scanning Calorimetry) and ISO 11357.

2. Copolymer according to Claim 1, **characterized in that** just one cycloaliphatic diamine, in particular bis(3-methyl-4-aminocyclohexyl)methane, was used as diamine to produce the amide units.

3. Copolymer according to Claim 1, **characterized in that** at least one noncycloaliphatic diamine participates in the composition of the monomers of the amide units in a proportion of at most 30 mol% with respect to the diamines of the said composition.

4. Copolymer according to one of Claims 1 to 3, **characterized in that** the aliphatic dicarboxylic acid(s) are chosen from aliphatic dicarboxylic acids having from 6 to 36 carbon atoms, preferably from 9 to 18 carbon atoms, in particular 1,10-decanedicarboxylic acid, 1,12-dodecanedicarboxylic acid, 1,14-tetradecanedicarboxylic acid and 1,18-octadecanedicarboxylic acid.

5. Copolymer according to one of Claims 1 to 4, **characterized in that** at least one nonaliphatic dicarboxylic acid participates in the composition of the monomers of the amide units in a proportion of at most 15 mol% with respect to the dicarboxylic acids of the said composition.

6. Copolymer according to Claim 5, **characterized in that** the nonaliphatic dicarboxylic acid is chosen from aromatic diacids, in particular isophthalic acid (I), terephthalic acid (T) and their mixtures.

7. Copolymer according to one of Claims 1 to 6, **characterized in that** the monomer(s) participating in a proportion of less than 50% by weight in the composition of the monomers of the amide units are chosen from lactams and α,ω-aminocarboxylic acids.

8. Copolymer according to Claim 7, **characterized in that** the lactam(s) are chosen from lactams having at least 6 carbons, in particular caprolactam, oenantholactam and lauryllactam.

9. Copolymer according to Claim 7, **characterized in that** the α,ω-aminocarboxylic acid(s) are chosen from those having at least 6 carbons, in particular aminocaproic acid, 7-aminoheptanoic acid, 11-aminoundecanoic acid or 12-aminododecanoic acid.

10. Copolymer according to one of Claims 1 to 9, **characterized in that** the amide units represent from 50% to 95% by weight of the said copolymer.

11. Copolymer according to one of Claims 1 to 10, **characterized in that** it includes amide units for which the number of carbons per amide is on average at least equal to 9.

12. Copolymer according to one of Claims 1 to 11, which is a copolymer comprising polyamide PA-polyether PE blocks, **characterized in that** the PA blocks are chosen from BMACM.9, BMACM.10, BMACM.12, BMACM.14, BMACM.18 and their blends or copolymers.

13. Copolymer according to one of Claims 1 to 12, which is a copolymer comprising polyamide PA-polyether PE blocks, **characterized in that** the PE blocks result from at least one polyalkylene ether polyol, in particular a polyalkylene ether diol.

14. Copolymer according to Claim 13, **characterized in that** the polyalkylene ether diol is chosen from polyethylene glycol (PEG), polypropylene glycol (PPG), polytrimethylene glycol (PO3G), polytetramethylene glycol (PTMG) and their blends or their copolymers.

15. Copolymer according to one of Claims 1 to 14, which is a copolymer comprising polyamide PA-polyether PE blocks, **characterized in that** the polyether blocks comprise polyoxyalkylene sequences comprising NH₂ chain ends.

16. Copolymer according to one of Claims 1 to 15, **characterized in that** the glass transition temperature of the said polymer is at least equal to 90°C.

17. Copolymer according to one of Claims 1 to 16, **characterized in that** it has a crystallinity such that the enthalpy of fusion during the second heating of an ISO DSC (delta Hm(2)) is less than or equal to 10 J/g, the weight being with respect to the amount of amide units present or of polyamide present.

18. Copolymer according to one of Claims 1 to 16, **characterized in that** it has a crystallinity such that the enthalpy of fusion during the second heating of an ISO DSC (delta Hm(2)) is between 10 and 30 J/g, preferentially between 10 and 25 J/g, the weight being with respect to the amount of amide units present or a polyamide present, this melting corresponding to that of the amide units.

19. Copolymer according to one of Claims 1 to 18, **characterized in that** it additionally comprises at least one additive chosen from heat stabilizers, UV stabilizers, colorants, nucleating agents, plasticizers or agents for improving the impact strength, the said additive(s) preferably having a refractive index similar to that of the said copolymer.

20. Copolymer according to one of Claims 1 to 19, which is a copolymer **characterized in that** the flexible ether units are chosen to be of highly hydrophilic nature, preferably of polyether block of PEG or its copolymers with PPG or PO3G type nature, which confers antistatic properties and waterproof-breathable (that is to say, allowing the passage of water vapour but not of liquid water) properties on the composition, it furthermore being possible for this composition to be additivated by third-party antistatic additives, in order to reinforce the overall antistatic effect, and by additives which make it possible to increase the blending compatibility with other polymers, it being possible for the copolymer, alone or thus additivated, subsequently to be specifically used as additive of another polymer or material in order to confer on it an increase in antistatic or waterproof-breathable properties.

21. Process for the preparation of a copolymer as defined in one of Claims 1 to 20, the said polymer being provided in the form of polyamide PA-polyether PE blocks, **characterized in that**:
- in a first stage, polyamide PA blocks are prepared by polycondensation
∘ of the diamine(s);
∘ of the dicarboxylic acid(s); and if appropriate, of the other polyamide comonomer(s) ;
∘ in the presence of a chain-limiting agent chosen from dicarboxylic acids; then
- in a second stage, the polyamide PA blocks obtained are reacted with polyether PE blocks in the presence of a catalyst.

22. Process for the preparation of a copolymer as defined in one of Claims 1 to 20, the said polymer being provided in the form of polyamide PA-polyether PE blocks, **characterized in that** a one-stage polycondensation is carried out
- of the diamine(s);
- of the dicarboxylic acid(s); and
- if appropriate, of the other polyamide comonomer(s);
- in the presence of a chain-limiting agent chosen from dicarboxylic acids;
- in the presence of the PE blocks;
- in the presence of a catalyst for the reaction between the PE (polyether) blocks and the PA blocks.

23. Preparation process according to either of Claims 21 and 22, **characterized in that** use is made, as chain-limiting agent, of the said dicarboxylic acid, which is introduced in excess with respect to the stoichiometry of the diamine(s).

24. Preparation process according to one of Claims 21 to 23, **characterized in that** use is made, as catalyst, of a derivative of a metal chosen from the group formed by titanium, zirconium and hafnium or of a strong acid, such as phosphoric acid, hypophosphorous acid or boric acid.

25. Preparation process according to one of Claims 21 to 24, **characterized in that** the polycondensation is carried out at a temperature of 240 to 280°C.

26. Shaped article, in particular transparent or translucent shaped article, such as fibre, fabric, film, sheet, rod, pipe or injection-moulded component, comprising the copolymer as defined in one of Claims 1 to 20 or prepared by a process as defined in one of Claims 21 to 25.

27. Shaped article according to Claim 26, **characterized in that** it consists of an item of sports equipment or a component of an item of sports equipment, such as a component of a sports shoe, an item of sports gear, such as ice skates, ski bindings, rackets, sports bats, boards, horseshoes, flippers or golf balls, of a recreational or do-it-yourself article, of an item of highway gear or equipment subjected to attacks by the weather and to mechanical assaults, of a protective article, such as helmet visors, glasses or sides of glasses, of a motor vehicle component, such as headlight protectors, rear view mirrors, small components of all-terrain motor vehicles or tanks, in particular of scooters, mopeds or motorbikes.
